Europäisches Patentamt

(19) European Patent Office

Office européen des brevets

(11) Publication number: **0 351 882**

**A2**

## (12) EUROPEAN PATENT APPLICATION

(21) Application number: **89113610.3**

(51) Int. Cl.⁴: **G05B 19/05**

(22) Date of filing: **24.07.89**

(30) Priority: **22.07.88 JP 181909/88**

(43) Date of publication of application:
**24.01.90 Bulletin 90/04**

(84) Designated Contracting States:
**DE FR IT NL SE**

(71) Applicant: **HITACHI, LTD.**
**6, Kanda Surugadai 4-chome**
**Chiyoda-ku Tokyo 101(JP)**

(72) Inventor: **Kurokawa, Naohiro**
**1023, Tagai**
**Shibata-shi(JP)**

(74) Representative: **Patentanwälte Beetz sen. -**
**Beetz jun. Timpe - Siegfried -**
**Schmitt-Fumian- Mayr**
**Steinsdorfstrasse 10**
**D-8000 München 22(DE)**

(54) **Programmable controller.**

(57) A programmable controller comprises an input (2) for reading an external signal, an output unit (5) for driving an external load and sequence processing means (4) for driving and controlling the external load to a predetermined state in accordance with a status of the external signal. The programmable controller further comprises an interface unit (8) for exchanging data with a peripheral unit and control means (7;18-22;25-40) for controlling the input/output unit in accordance with command data from the peripheral unit connected to the interface unit to permit the control of the external signal and the external load connected to the programmable controller, from the peripheral unit.

FIG.1

## PROGRAMMABLE CONTROLLER

## BACKGROUND OF THE INVENTION

### FIELD OF THE INVENTION

The present invention relates to a programmable controller, and more particularly to techniques of a programmable controller adapted to connect with and be controlled by a general purpose personal computer.

### DESCRIPTION OF THE PRIOR ART

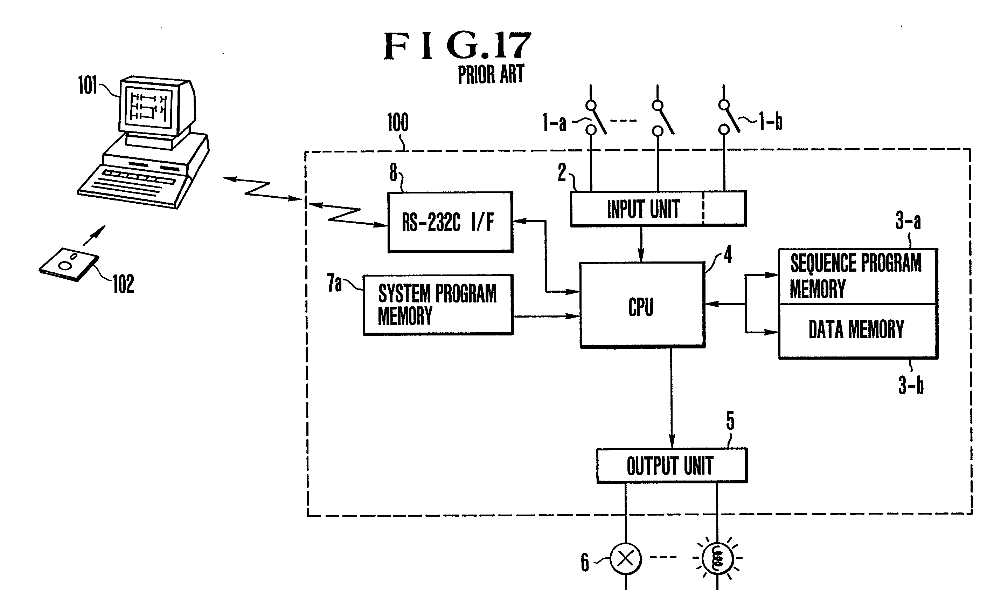

In a prior art programmable controller 100 (hereinafter referred to as PC) shown in Fig. 17, a sequence program for controlling various loads 6 is programmed by a programming device and it is stored in a memory 3-a of the PC. Then, external signals 1-a are read from sensors and limit switches and they are processed in accordance with the sequence program stored in the sequence program memory 3-a. The result output is used to control the various loads 6.

An overall operation is performed by a central processing unit 4 in accordance with the content of a system program memory 7a which controls the units in the system.

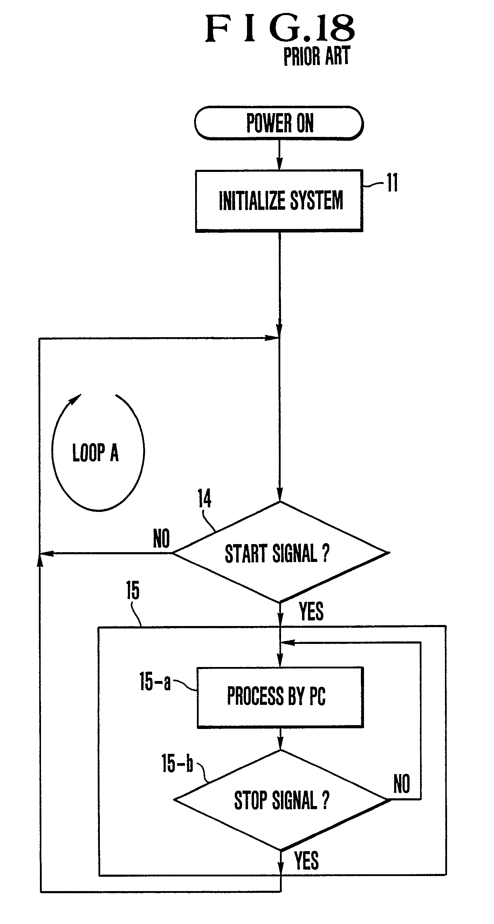

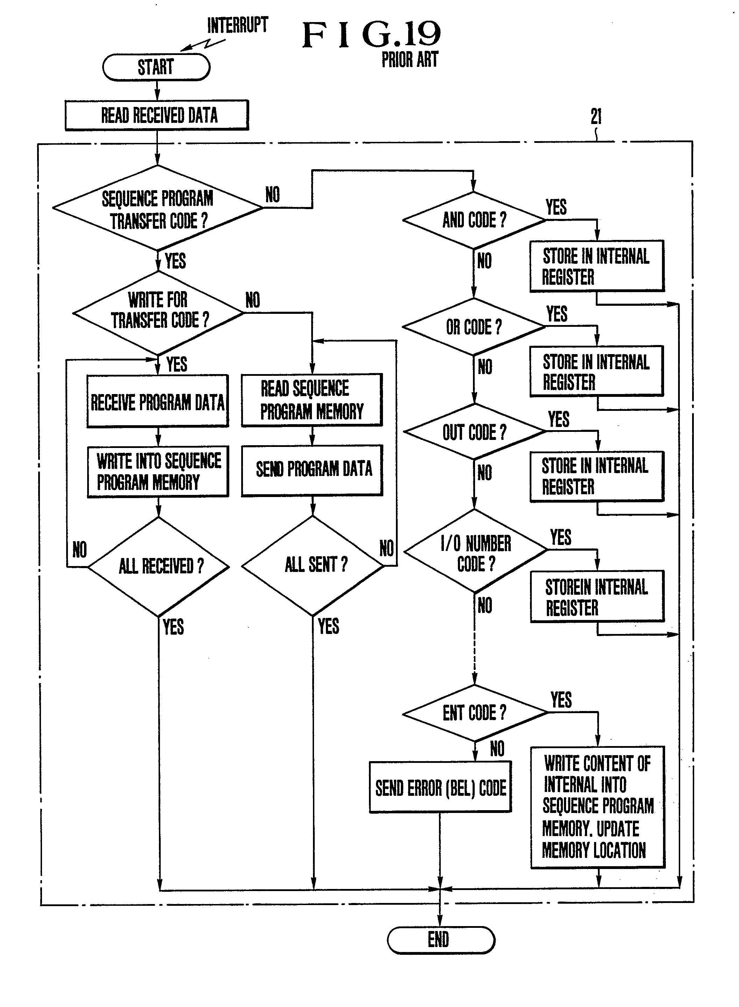

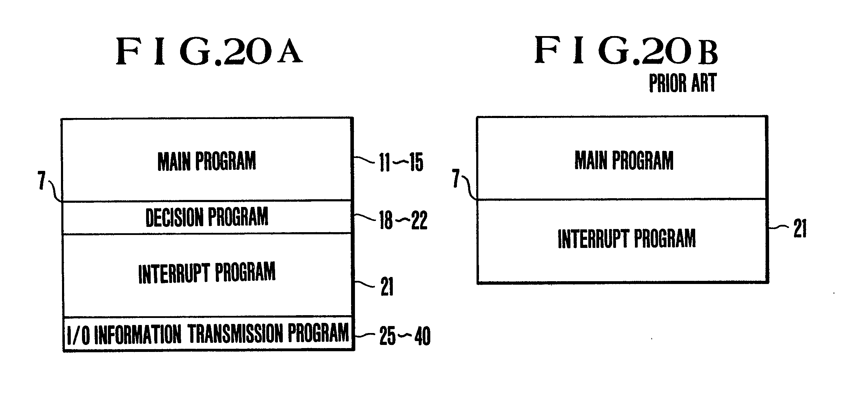

Figs. 18 and 19 show operational flows of the system of Fig. 17. Fig. 18 shows a main flow for the sequence operation in accordance with the content of the sequence program memory 3-a, and Fig. 19 shows a flow for writing and reading the sequence program or monitoring the operation by a user. They are stored in the system program memory 7a in the form of machine language of the CPU as a main program and an interrupt (not necessarily interrupt) program, as shown in Fig. 20B.

In such a PC, the programming device may be an inexpensive one having several keys and a simple display unit, or a so-called personal computer 101 having a CRT as shown in Fig. 17. In the latter case, the operation is controlled by a program 102 (floppy disk) designed for the PC.

Related art to those systems is disclosed in U.S. Patents 4,442,504 and 3,964,026.

In the prior art, the former is intended to realize a portable and inexpensive system and the latter is intended to realize the easiness in preparing the sequence program and the visibility. It is expensive and very difficult to design for general purpose because of a system control program configuration which closely fits to the internal expression of the PC.

The personal computer has an excellent function in computing and storing information but it is weak to external noise under a high-power environment. Accordingly, the PC is frequently used as a controller.

However, the PC is designed to control in accordance with the sequence program stored in the PC. Since it is constructed by the complex internal expression, it is difficult for the user to freely access to the PC and it is necessary for the user to purchase the dedicated system control program. The user cannot freely control the loads, or calculate, store or manage information. Very few times are available which can be controlled by the personal computer.

## SUMMARY OF THE INVENTION

It is an object of the present invention to provide a programmable controller which can be simply and freely accessed from a peripheral unit.

It is another object of the present invention to provide a programmable controller which permits the connection of a computer as a peripheral unit and which can be simply and freely accessed through the computer.

It is another object of the present invention to provide a programmable controller which can be controlled by a computer system.

In order to achieve the above objects, in accordance with one feature of the present invention, a programmable controller comprises an input unit for reading an external signal, an output unit for driving an external load, sequence operation processing means for driving and controlling the external load to a predetermined state in accordance with the external signal, an interface unit for exchanging data with a peripheral unit, and control means for controlling the input unit and the output unit in accordance with command data from the peripheral unit connected to the interface unit.

Thus, when a desired command code is sent from the peripheral unit to the programmable controller, the control means performs the desired control operation.

In a preferred aspect, the control means includes data sendback means for sending a status data of the external signal at the input unit designated by the input command data from the peripheral unit back to the peripheral unit through the interface unit, and output control means for driving and controlling the external load connected to the output unit designated by the output command data from the peripheral unit.

Thus, the status of the external signal connected to the input unit of the programmable controller can be detected and ascertained at the peripheral unit by the command data from the peripheral unit, and the external load connected to the output unit of the programmable controller can be driven and controlled at the peripheral unit. The peripheral unit is preferably a computer having a communication function. In this case, the external signal at the input unit of the programmable controller and the external load connected to the output unit are regarded as being coupled to the computer and they can be readily controlled.

BRIEF DESCRIPTION OF THE DRAWINGS

Fig. 1 shows a block diagram of a PC connected with a personal computer, in accordance with a first embodiment of the present invention,

Figs. 2 and 3 show examples of transmission codes in the first embodiment, in which Fig. 2 shows a transmission code to be sent from the personal computer to the PC and Fig. 3 shows a transmission code to be sent from the PC to the personal computer,

Figs. 4 and 5 show flow charts of operations in the first embodiment,

Figs. 6 - 8 show applications of the first embodiment, in which Fig. 6 shows an object to be controlled and a sensor, Fig. 7 shows a flow chart of the operation and Fig. 8 shows a signal transmission status between the PC and the personal computer,

Fig. 9 shows a block diagram of a PC connected to a personal computer, in accordance with a second embodiment of the present invention,

Figs. 10 and 11 show examples of a transmission code in the second embodiment, in which Fig. 10 shows a transmission code to be sent from the personal computer to the PC and Fig. 11 shows a transmission code to be sent from the PC to the personal computer,

Figs. 12 and 13 show flow charts of the operations in the second embodiment,

Fig. 14 shows a transmission code to be sent from the personal computer to the PC in a third embodiment of the present invention,

Figs. 15 and 16 show flow charts of the operations in the third embodiment,

Fig. 17 shows a block diagram of a conventional PC connected to a personal computer,

Figs. 18 and 19 show flow charts of the operations of the conventional PC, and

Figs. 20A and 20B show program structures of the PC, in which Fig. 20A shows a program structure of the PC in the first embodiment and Fig. 20B shows a program structure of the conventional PC.

DESCRIPTION OF THE PREFERRED EMBODIMENTS

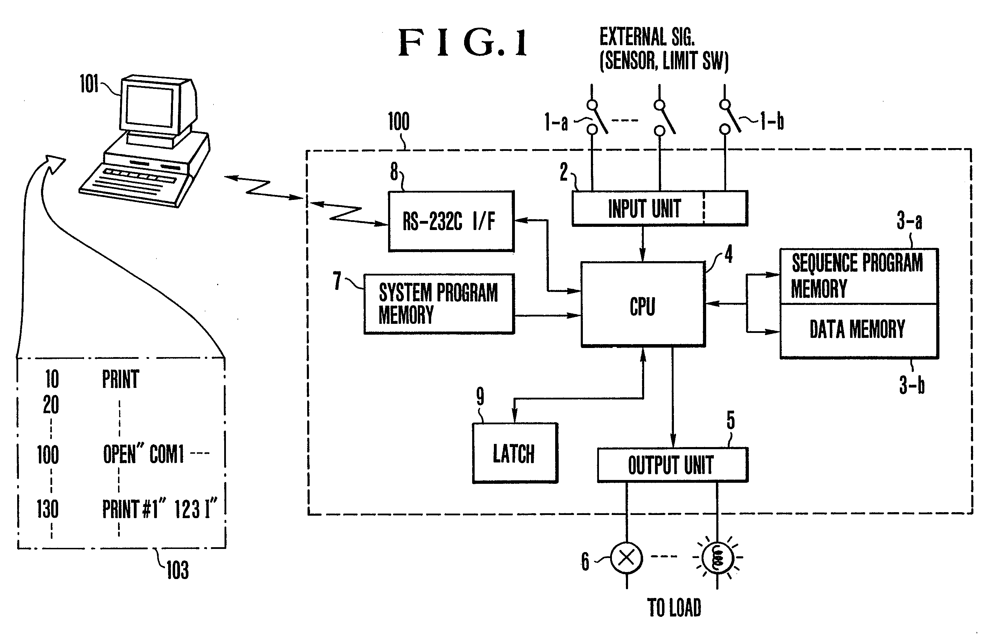

A first embodiment of the present invention is explained with reference to Figs. 1 to 8. Fig. 1 shows a connection of a programmable controller (PC) and a personal computer 101 in the first embodiment. An internal configuration of the PC is shown by a block diagram. Numeral 1-a denotes an external signal from a sensor or a limit switch, numeral 2 denotes an input unit for reading the external signals, numeral 3-a denotes a sequence program memory for storing a sequence program prepared by a user by using the personal computer or a programming device (not shown), numeral 4 denotes a central processing unit (CPU) for logically and arithmetically operating the external signals 1-a in accordance with the sequence program, numeral 3-b denotes a data memory for storing the operation results of the CPU 4, numeral 5 denotes an output unit for conveying the operation results to a load 6, and numeral 7 denotes a system program memory for controlling the units described above and to be described below.

Numeral 1-b denotes an input device (such as a switch) for starting and stopping the operation by the sequence program when the PC is operated.

Numeral 8 denotes an interface unit for exchanging signals with an external peripheral unit. It is designed in accordance with the known RS-232C interface standard. The interface unit 8 is connected with the external personal computer or programming device.

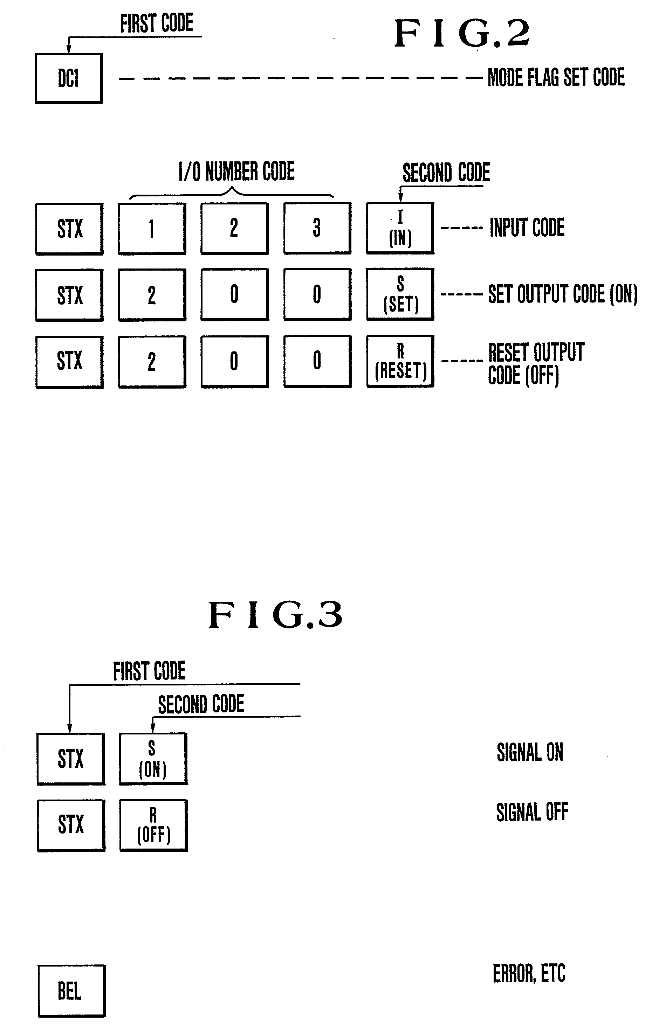

Numeral 9 denotes a latch circuit (which may be a flip-flop or a register) provided for the present embodiment. It is set by a first code (a) shown in Fig. 2. Fig. 2 shows types of a series of transmission codes to be received by the personal computers through the RS-232C interface unit 8. They include (1) a first code such as the code (a) for controlling the start of operation and a code for indicating the beginning of the transmission information, (2) a second code such as an input code for requesting input information such as the external signal, an output set code for setting (ON) the output, and an output reset code for resetting (OFF) the output, and (3) an I/O number code for designating a desired input or output number prior to the second code.

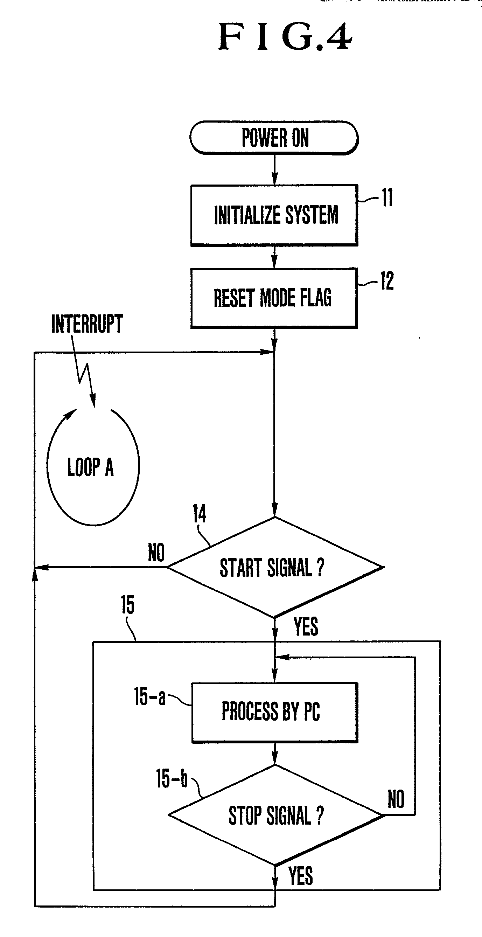

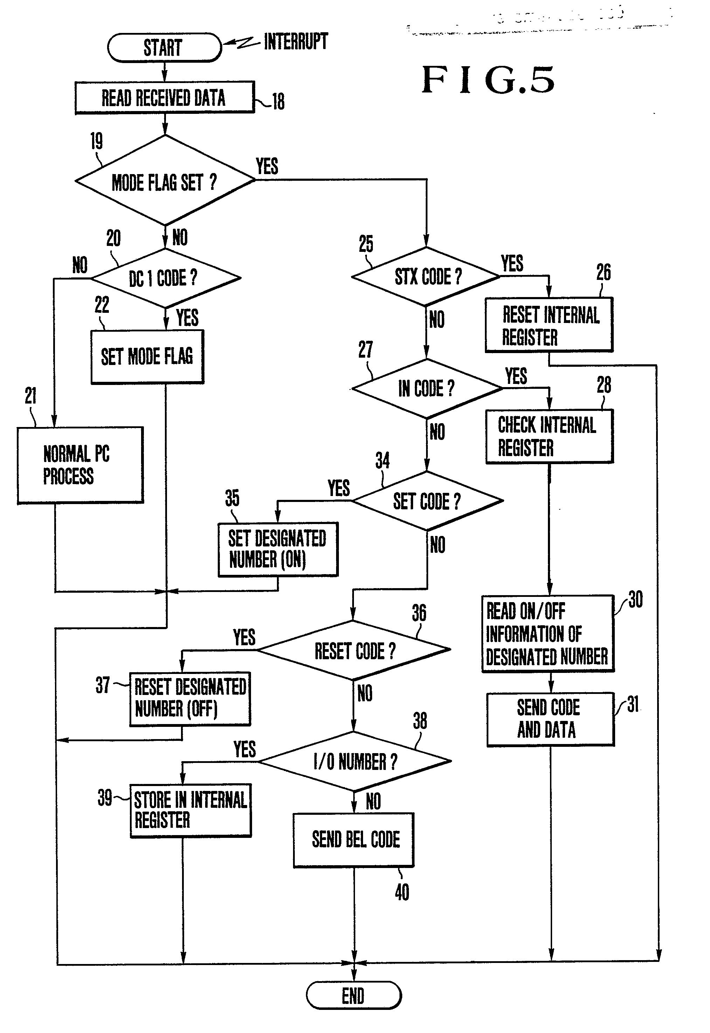

The operation of the circuit thus constructed is now explained with reference to flow charts shown in Figs. 4 and 5.

Fig. 4 shows a flow chart of an overall operation of the PC. When a power is turned on, the PC is initialized (11) and a mode flag of the present invention is reset (12). The mode flag is stored in the latch circuit 9 shown in Fig. 1 and it can be freely read and written.

In a decision step (14), the presence or absence of the start signal (the status of the switch 1-b) is checked. If it is absent, the loop A is repeated, and if it is present, the operation in accordance with the sequence program which is the inherent function of the PC is performed (15).

The steps 14 and 15 are basic ones of the conventional PC. In the loop A, a reception interruption from the RS-232C interface of Fig. 1 is permitted when the code described above is received, the operation shown in Fig. 5 is performed.

Fig. 5 shows a detailed flow chart of the operation of the present embodiment. The functional operations performed by the transmission codes shown in Fig. 2 are explained in detail with reference to Fig. 5.

When the user wishes to access to the PC, he/she keeps the start signal 1-b of the PC at the stop status and turns on the power to maintain the loop A shown in Fig. 4.

Then, the mode flag set code DCI of the transmission code shown in Fig. 2 is sent to the RS-232C interface unit 8.

When the RS-232C interface unit 8 of the PC receives it, an interrupt request is issued to the CPU 4 so that the interrupt process shown in Fig. 5 is performed.

Namely, the received data is read (18) and the set/reset status of the mode flag is checked (19). Since the mode flag has been reset in (12) of Fig. 4 as described before, the decision is NO and the next decision is made (20). In the decision step (20), since the received data is the mode flag set code, the mode flag set is processed (22) so that the latch 9 shown in Fig. 1 is set, the interruption is terminated and the process returns to the loop A shown in Fig. 4.

Under this condition, one of the transmission codes (c) - (e) of Fig. 2 is sent from the personal computer to the RS-232C interface unit 8. Thus, the interruption request is issued to the CPU 4. Since the mode flag has been set at this time, the steps (25) et seq of Fig. 5 are performed.

The operation for the input code (c) is explained. When the code STX which indicates the beginning of the transmission code of the first code is received, the data memory 3-b (internal register) is reset (or cleared) (26) so that it is ready to receive the next code. When the I/O number code is next received (38), it is stored in the internal register 3-b (39). When the second code (IN in the present instance) is received (18), the decision (27) is YES and the I/O number stored in the internal register 3-b is converted to an address number corresponding to the hardware which can be performed by the CPU 4 or the appropriateness of the I/O number is checked (28).

The ON/OFF information of the address number (input member in the present instance) designated by the I/O number is read from the input unit 2 and the code (g) or (h) of Fig. 3 is sent to the personal computer through the RS-232C interface unit 8 (31).

Referring to Fig. 3, the first code STX is one which indicates the beginning of the transmission code, and BEL is code information which is sent when the I/O number is not proper.

The second code represents the ON/OFF information. S represents ON and R represents OFF.

The output set code (d) in Fig. 2 is explained. The first code (STX) and the I/O number code (200) are processed (26 and 39). When the output set code (SET in the present instance) which is the second code is received, the decision steps 19, 25, 27 and 34 and a step 35 are performed.

In the step 35, the I/O number stored in the internal register 3-b is converted to an address number corresponding to the hardware executable by the CPU 4 or the appropriates of the I/O number is checked. If it is proper, a latch (not shown) in the output unit 5 corresponding to the address number (output number in the present instance) designated by the I/O number is set (ON), and the process is terminated.

The operation for the output reset code (e) of Fig. 2 is similar to that for (d) except that the latch in the output unit 5 is reset (OFF) in the step 37.

The control program for the above operation is stored in the sequence program memory 7 as shown in Fig. 20A, in which it is stored after the conventional interrupt program 21.

In the normal PC mode, any code may be sent through the RS-232C interface unit 8 if the code is other than the mode set code (a) shown in Fig. 2. This means that the preparation of the sequence program by the internal expression of the PC and the monitoring may be performed (21 in Fig. 5).

The transmission codes shown in Figs. 2 and 3 are in ASCII code, although they may comply with other similar codes.

A control code which indicates the end of the transmission code may be added after the second code. The peripheral interface unit is RS-232C interface, although it may be other interface.

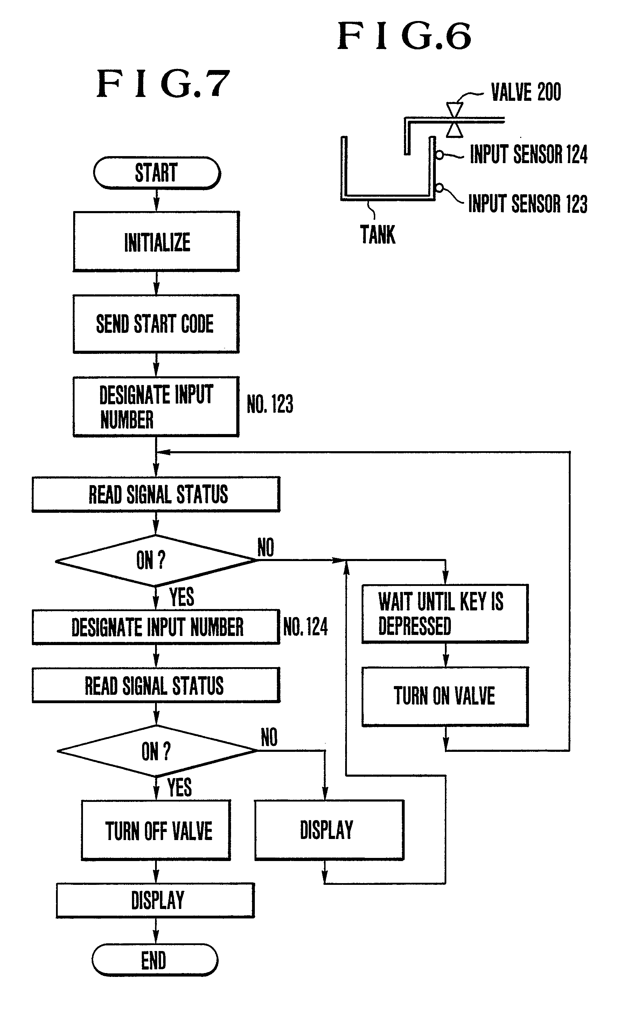

Applications of the present invention are explained with reference to Figs. 6 - 8.

Fig. 6 shows an example in which water is to be supplied into a tank until it reaches a predetermined level. It comprises a value (No. 200) which is a load, an input sensor (No. 123) for detecting a lower limit water level and an input sensor (No. 124) for detecting an upper limit water level. If there is no water, the user depresses a key of the personal computer to start the supply of water and the supply is automatically stopped at the upper limit water level.

The above control is shown in a process flow of Fig. 7. It may be readily implemented by a BASIC language.

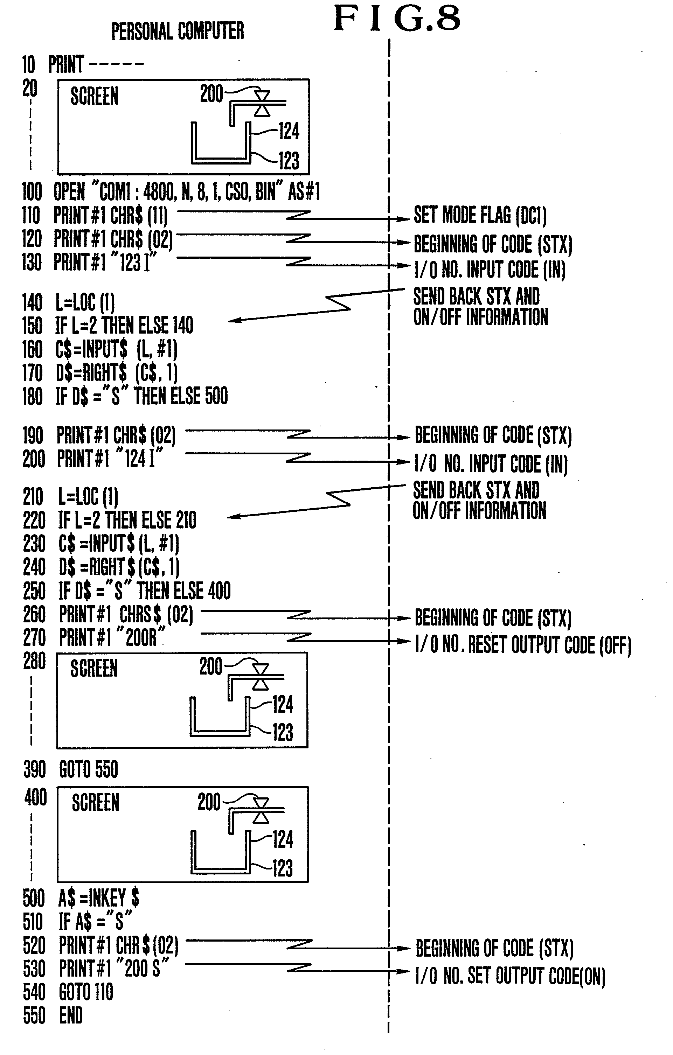

Fig. 8 shows a portion used to access to the PC. It may be readily programmed even by a beginner.

Since the operation status is displayed on the CRT, the user may perform visual control.

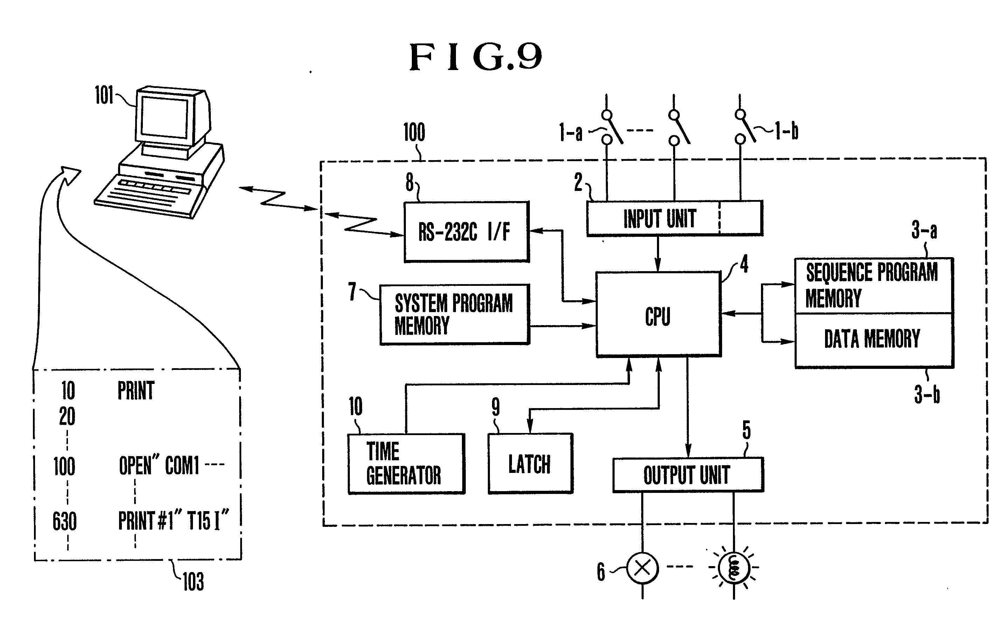

A second embodiment of the present invention is now explained with reference to Figs. 9 - 13.

In Fig. 9, a time generator 10 is added to the first embodiment described above. The time generator 10 generates a square wave at a predetermined time interval and it is read by the CPU.

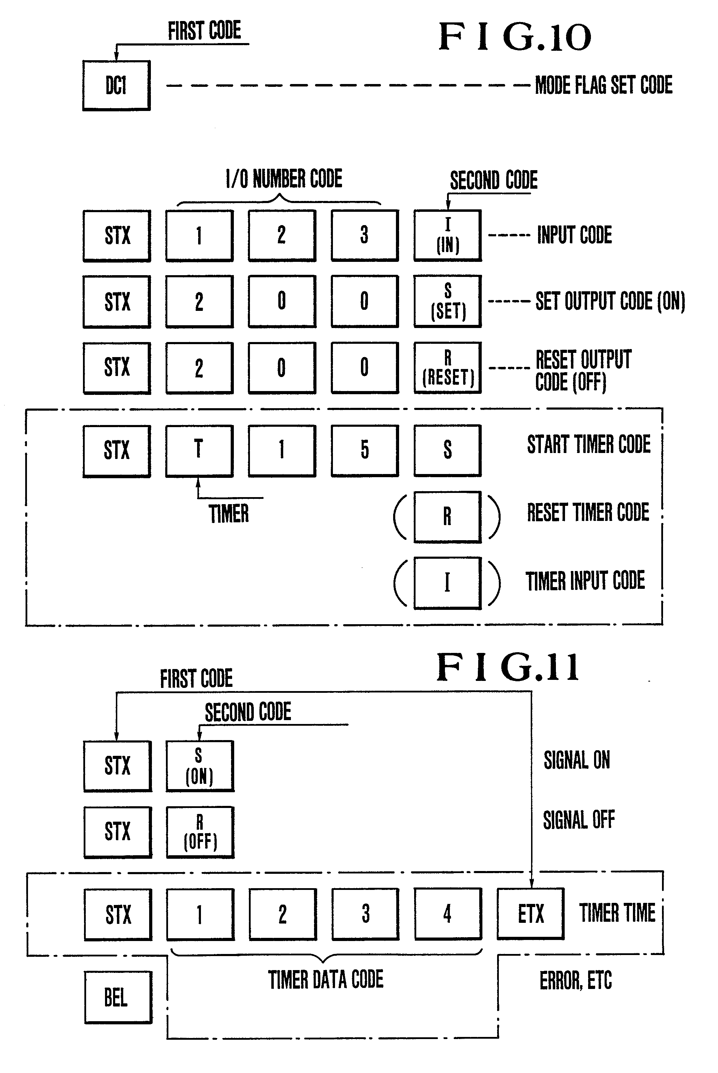

Fig. 10 shows transmission codes. For the time generator 10, "T" which indicates the timer number is defined in the I/O number code as shown in (f) of Fig. 10. In the second code, start timer corresponds to the output set code (S), reset timer corresponds to the output reset code (R) and input timer corresponds to the input code (I).

In Fig. 11, (i) shows a transmission format to send elapse time information to the personal computer as numerical data for the timer input code (I). ETX is a code which indicates the end, added after the timer data code (elapse time information). It may be omitted but it is useful as a punctuation mark.

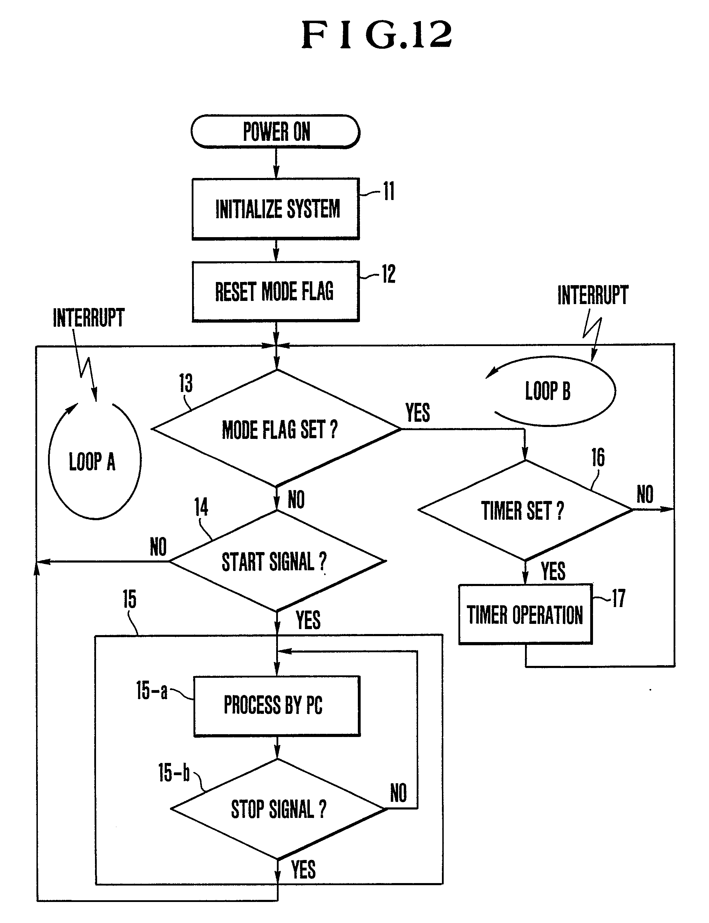

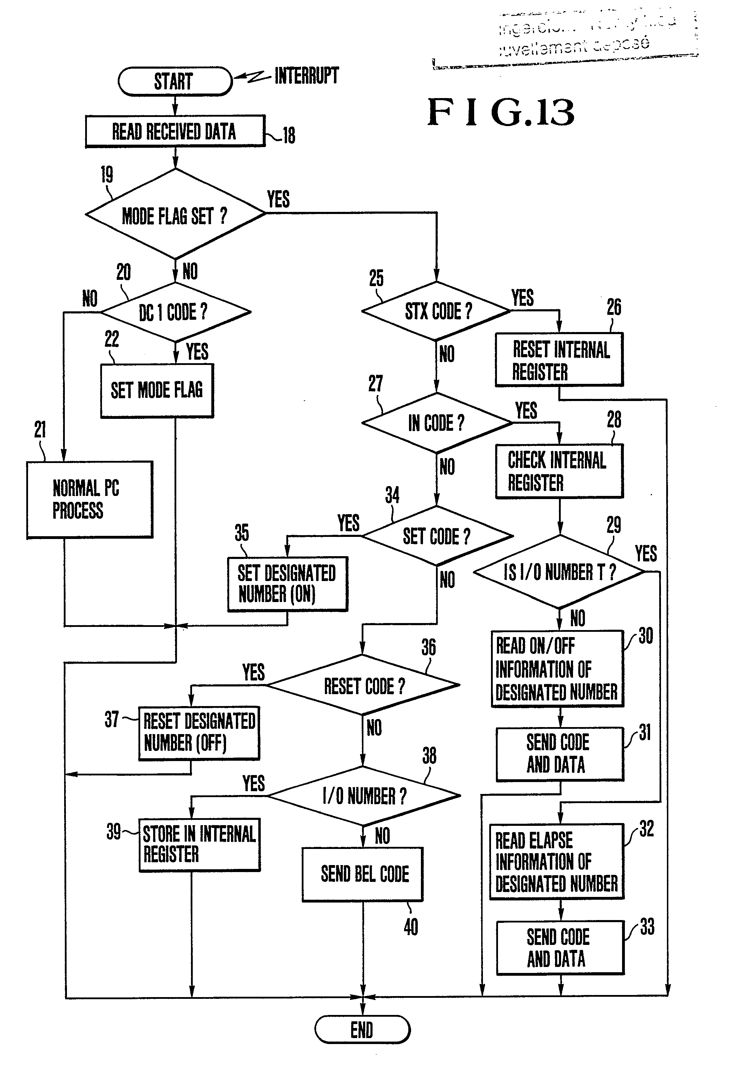

The operation is now explained by flow charts shown in Figs. 12 and 13.

Fig. 12 shows a main flow. When the power is turned on, the system is initialized (11), the mode flag is reset (12) and the mode flag is checked. If it is not in the set state, a decision step 14 is performed, and if a start signal is not present, the loop A is repeated. If the set status is detected in the decision step 13, a decision step 16 is performed and the presence or absence of the set timer (start) is checked. If it is not present, the loop B is repeated, and if it is present, the timer operation is performed.

The timer operation reads the square wave generated by the timer generator 10, detects an edge of the square wave and increments (counts up) the content of the internal register assigned to the corresponding timer number.

Where there are a plurality of timer numbers, the operation is performed for those which have been set (started). At the end of the operation, the loop B is repeated.

In the loops A and B, the reception interruption from the RS-232C interface unit 8 may be accepted.

Fig. 13 shows a process flow when the reception interruption is issued. Like in the first embodiment, when the mode flag set code of the first code is received (18), the mode flag is set (22) and a similar process to that in the first embodiment is performed. For the set output code (S) and the reset output code (R), the internal register for the timer is started and reset in the set step 35 and the reset step 37 of the designated number, respectively.

For the input code (I), the elapse information (updated in the step 17) of the designated number is read (32) and it is sent as the transmission code shown by (i) in Fig. 11 to the RS-232C interface unit 8.

In this manner, a plurality of timer operations which are difficult to manage at the personal computer can be readily performed in the present invention.

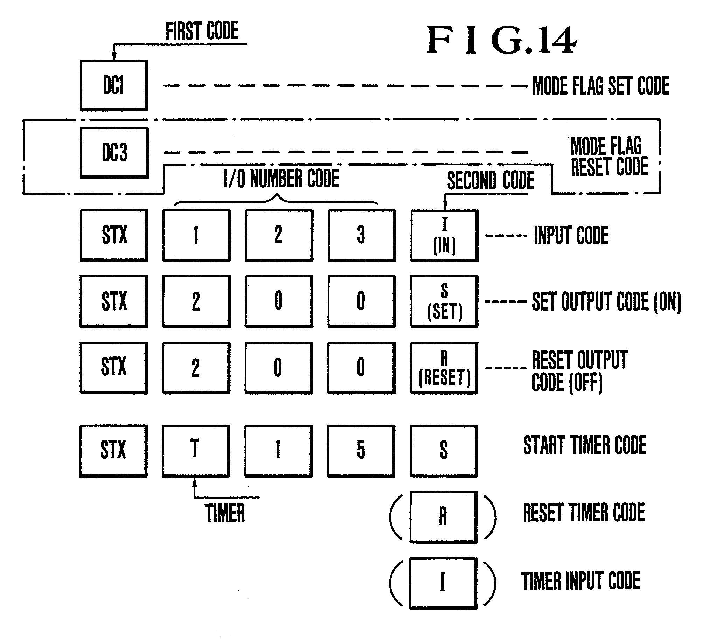

A third embodiment of the present invention is explained with reference to Figs. 14 - 16.

Fig. 14 shows transmission codes provided for the present invention. A mode flag reset code (b) is added to the previous embodiment.

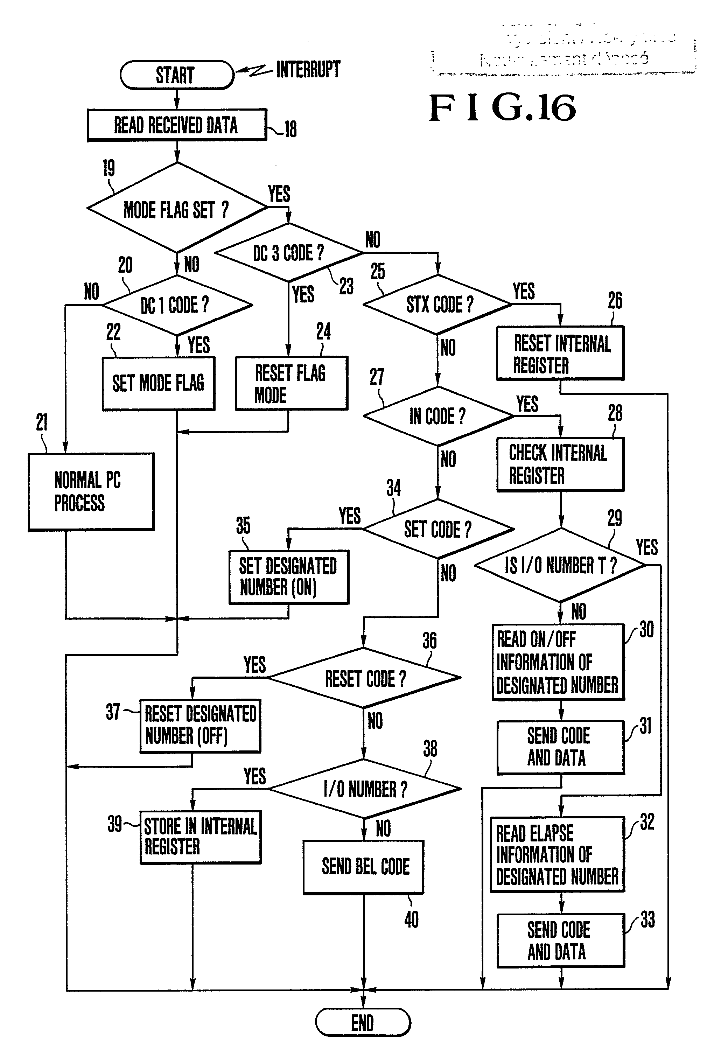

The mode flag reset code is used to stop the I/O information transmission function explained in the above embodiment. It is shown in a process flow of Fig. 16.

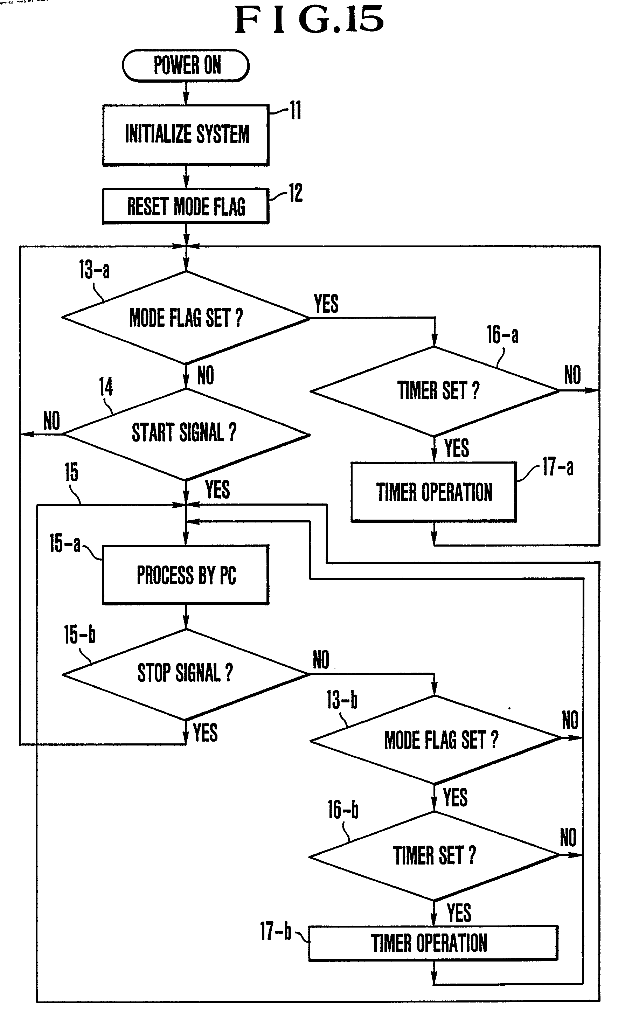

Fig. 15 shows a main flow of the process. The steps 11 - 17 are identical to those of the second embodiment. In the present embodiment, decision steps 13' and 16' and a step 17' are provided in the step 15 so that the I/O information and the timer elapse time information can be transmitted at each end (loop C) of the sequence operation which is inherent to the PC.

Fig. 16 shows a process flow when the reception interruption is issued from the RS-232C interface unit 8 in the loops A, B and C shown in Fig. 15. A decision step 23 and a step 24 are added to the previous embodiment.

In the operation, the power of the PC is turned on, the system is initialized (11), the mode flag is reset (12) and the loop A is maintained.

Under this condition, the various transmission codes from the personal computer can be received. It is assumed that the start signal 1-b shown in Fig. 1 has been received.

If the sequence program has been stored in the sequence program memory 3-a of the PC, the CPU executes the sequence program (15-a). At the end of a series of steps, the presence or absence of the step (or start) signal is checked, and if it is not present, the process is repeated again through the loop C.

When the key mode flag set code is received from the personal computer through the RS-232C interface unit, the mode flag is set as shown in Fig. 16, and the I/O information is sent to the personal computer for the requesting code.

When the personal computer need no longer send the I/O information, the mode flag reset code provided in the present invention is sent from the personal computer. The decision step 23 outputs YES and the mode flag reset step 24 is performed.

Thus, the CPU executes only the sequence program.

This means that the inherent function of the PC, that is, the execution of the content of the sequence program memory, and the I/O information transmission function for the request from the personal computer can be performed.

For the user, the complex control is done by the inherent function of the PC and a portion which need visual expression is executed by the program in the personal computer. Not only the visual expression but also the sequence control may be performed by coupling the user operation to the PC sequence control.

In accordance with the present embodiment, means for storing the mode flag is provided in the PC and the process for accessing to the I/O information is stored as the PC system program. Thus;

1. the use can easily access the I/O information in the PC by preparing the program by a simple language of the personal computer such as BASIC language,

2. a plurality of timer times which cannot be managed by the personal computer, can be accessed by accessing to the PC so that soft load control is attained,

3. the user can readily understand the transmission codes because of a reduced number of codes, and

4. the external noise to the personal computer is prevented because of the resistance of the PC to the electrical environment and the reliability is improved.

## Claims

1. A programmable controller having an input unit (2) for reading an external signal, an output unit (5) for dividing an external load and sequence processing means (4) for dividing and controlling the external load to a predetermined state in accordance with a status of the external signal, comprising:
an interface unit (8) for exchanging data with a peripheral unit; and
a control unit (7: 18 - 22, 25 - 40) for controlling said input unit and said output unit in accordance with command data from the peripheral unit connected to said interface unit.

2. A programmable controller according to Claim 1 wherein said control means includes:
data sendback means for sending status data of the external signal at the input unit designated by input command data from the peripheral unit back to the peripheral unit through the interface unit in accordance with the input command data; and
output control means for dividing and controlling the external load connected to the output unit designated by output command data from the peripheral unit in accordance with the output command data.

3. A programmable controller according to Claim 2 wherein said control means includes mode setting means for setting a mode to permit the operation of said data sendback means and the output control means in accordance with a predetermined command data from the peripheral unit.

4. A programmable controller according to Claim 2 wherein said control means includes mode setting means for setting a mode to permit the operation of said data sendback means and said output control means and inhibit the operation of said sequence processing means in accordance with a predetermined command data from the peripheral unit.

5. A programmable controller according to Claim 1 wherein said control means includes mode setting means for setting a mode to inhibit the operation of the sequence processing means in accordance with a predetermined command data from the peripheral unit.

6. A programmable controller according to Claim 1 wherein said peripheral unit is a data processing unit.

7. A programmable controller according to Claim 1 wherein said peripheral unit is a computer.

8. A programmable controller including an input unit (2) for reading an external signal, an output unit (5) for driving an external load and sequence processing means (4) for driving and controlling the external load to a predetermined state in accordance with a status of the external signal, comprising:
an interface unit (8) for exchanging data with a peripheral unit; and
data sendback means for sending status data of the external signal at the input unit designated by command data from the peripheral unit connected to the interface unit back to the peripheral unit through the interface unit in accordance with the command data.

9. A programmable controller including an input unit (2) for reading an external signal, an output unit (5) for driving an external load and sequence processing means (4) for driving and controlling the external load to a predetermined state in accordance with a status of the external signal, comprising:
an interface unit (8) for exchanging data with the peripheral unit; and
output control means for driving and controlling the external load connected to the output unit designated by command data from the peripheral unit connected to the interface unit in accordance with the command data.

10. A programmable controller including an input unit for reading an external signal, an output unit for driving an external load and sequence processing means for driving and controlling the external load to a predetermined state in accordance with a status of the external signal, comprising:

an interface unit for exchanging data with a peripheral unit;

command decode means for decoding command data from the peripheral unit connected to the interface unit; and

control means for controlling the input unit and the output unit in accordance with the command data decoded by the decode means.

11. A programmable controller comprising:

an input unit for reading a plurality of external signals;

an output unit for driving a plurality of external loads;

sequence processing means for driving and controlling said external loads to predetermined states in accordance with status of the external signals;

an interface unit for exchanging data with a peripheral unit;

data sendback means for sending status data of the external signals at the input unit designated by input command data from the peripheral unit back to the peripheral unit through the interface unit in accordance with the input command data; and

output control means for driving and controlling the external loads connected to the output unit designated by output command data from the peripheral unit in accordance with the output command data.

12. A programmable controller comprising:

an input unit for reading a plurality of external signals;

an output unit for driving a plurality of external loads;

sequence processing means for driving and controlling the external loads to predetermined states in accordance with status of the external signals;

an interface unit for exchanging data with a peripheral unit;

data sendback means for sending status data of the external signals connected to the input unit designated by input command data from the peripheral unit back to the peripheral unit through the interface unit in accordance with the input command data;

output control means for driving and controlling the external loads connected to the output unit designated by output command data from the peripheral unit in accordance with the output command data; and

mode setting means for setting a mode to permit the operation of the data sendback means and the output control means and inhibit the operation of the sequence processing means in accordance with a predetermined command data from the peripheral unit.

13. A programmable controller comprising:

an input unit for reading a plurality of external signals;

an output unit for driving a plurality of external loads;

sequence processing means for driving and controlling the external loads to predetermined states in accordance with status of the external signals;

an interface unit for exchanging data with a peripheral unit;

a status memory for storing a mode status;

control means for controlling the input unit and the output unit in accordance with command data from the peripheral unit connected to the interface unit;

status storing means for storing a predetermined specific mode data into the status memory in accordance with a predetermined specific command data from the peripheral unit; and

decision means for receiving the command data from the peripheral unit connected to the interface unit to supply the command data to the control means when the status storing means stores therein the specific mode data.

14. A programmable controller according to Claim 13 wherein the command data includes:

specific mode store command data for commanding to store the specific mode data in the status memory;

selective designation data for selectively designating one of the external signals and the external loads at the designated input unit and output unit;

input command data for commanding to send the status data of the external signals and the external loads at the input unit and the output unit designated by the selection command data back to the peripheral unit through the interface unit; and

output command data for driving the external loads connected to the output unit designated by the selection command data.

15. A programmable controller according to Claim 14 wherein said control means includes a selective information memory for storing selected information of the input unit and the output unit selected by the selective designation data, and the input unit and the output unit designated by the content of the selective information memory are controlled in the execution of the control by the command of the input/output command data.

16. A programmable controller comprising:

an input unit for reading a plurality of external signals;

an output unit for driving a plurality of external loads;

reference time signal generation means for generating a reference time signal at a predetermined time interval;

an elapse time memory for storing an elapse time;

elapse time update means for receiving the reference time signal from the reference time signal generation means to update the elapse time of the elapse time memory;

sequence processing means for driving and controlling the external loads to predetermined states in accordance with status of the external signals and the elapse time memory;

an interface unit for exchanging data with a peripheral unit; and

elapse time data sendback means for sending the elapse time data of the elapse time memory back to the peripheral unit through the interface unit in accordance with the elapse time input command data from the peripheral unit.

17. A programmable controller according to Claim 16 wherein said elapse time update means starts the updating of the elapse time memory in accordance with an elapse time measurement start command from the peripheral unit connected to the interface unit.

18. A programmable controller according to Claim 16 wherein said elapse time memory includes a plurality of storage areas having different addresses allotted thereto, and the start of updating is independently commanded for each storage area.

19. A programmable controller according to Claim 18 wherein the peripheral unit reads any one of the elapse time storage areas by addressing.

# FIG. 1

EXTERNAL SIG.
(SENSOR, LIMIT SW)

1-b

1-a

INPUT UNIT  2

RS-232C I/F  8

SYSTEM PROGRAM MEMORY  7

100

CPU  4

SEQUENCE PROGRAM MEMORY  3-a

DATA MEMORY  3-b

OUTPUT UNIT  5

LATCH  9

TO LOAD

6

101

```
10   PRINT --- --- ---
20   --- OPEN" COM1 ---
100  --- PRINT --- ---
130  --- PRINT #1" 123 I"
```

103

# F I G.2

FIRST CODE

| DC1 | — — — — — — — — — — — — — | MODE FLAG SET CODE |

I/O NUMBER CODE  SECOND CODE

| STX | 1 | 2 | 3 | I (IN) | ----- INPUT CODE |
| STX | 2 | 0 | 0 | S (SET) | ----- SET OUTPUT CODE (ON) |
| STX | 2 | 0 | 0 | R (RESET) | ----- RESET OUTPUT CODE (OFF) |

# F I G.3

FIRST CODE

SECOND CODE

| STX | S (ON) | SIGNAL ON |
| STX | R (OFF) | SIGNAL OFF |

| BEL | ERROR, ETC |

# FIG.4

## FIG.5

START ← INTERRUPT

READ RECEIVED DATA —18

19 — MODE FLAG SET ? — YES

NO

20 — DC 1 CODE ? — NO

YES

22 — SET MODE FLAG

21 — NORMAL PC PROCESS

25 — STX CODE ? — YES

26 — RESET INTERNAL REGISTER

NO

27 — IN CODE ? — YES

28 — CHECK INTERNAL REGISTER

NO

34 — SET CODE ? — YES

35 — SET DESIGNATED NUMBER (ON)

NO

30 — READ ON/OFF INFORMATION OF DESIGNATED NUMBER

31 — SEND CODE AND DATA

36 — RESET CODE ? — YES

37 — RESET DESIGNATED NUMBER (OFF)

NO

38 — I/O NUMBER ? — YES

39 — STORE IN INTERNAL REGISTER

NO

SEND BEL CODE — 40

END

# FIG.6

VALVE 200

INPUT SENSOR 124

INPUT SENSOR 123

TANK

# FIG.7

START

INITIALIZE

SEND START CODE

DESIGNATE INPUT NUMBER — NO. 123

READ SIGNAL STATUS

ON ? — NO → WAIT UNTIL KEY IS DEPRESSED

YES

DESIGNATE INPUT NUMBER — NO. 124

READ SIGNAL STATUS

TURN ON VALVE

ON ? — NO → DISPLAY

YES

TURN OFF VALVE

DISPLAY

DISPLAY

END

# FIG.8

**PERSONAL COMPUTER**

```
10   PRINT -----
20        SCREEN        200
                                        124
                                        123

100  OPEN "COM1 : 4800, N, 8, 1, CSO, BIN" AS#1
110  PRINT#1 CHR$ (11) ─────────────────────▶ SET MODE FLAG (DC1)
120  PRINT#1 CHR$ (02) ─────────────────────▶ BEGINNING OF CODE (STX)
130  PRINT#1 "123 I" ───────────────────────▶ I/O NO. INPUT CODE (IN)

140  L=LOC (1)                               SEND BACK STX AND
150  IF L=2 THEN ELSE 140   ◀─────────────── ON/OFF INFORMATION
160  C$=INPUT$ (L, #1)
170  D$=RIGHT$ (C$, 1)
180  IF D$ ="S" THEN ELSE 500

190  PRINT#1 CHR$ (02) ─────────────────────▶ BEGINNING OF CODE (STX)
200  PRINT#1 "124 I" ───────────────────────▶ I/O  NO. INPUT CODE (IN)

210  L=LOC (1)                               SEND BACK STX AND
220  IF L=2 THEN ELSE 210   ◀─────────────── ON/OFF INFORMATION
230  C$ =INPUT$ (L, #1)
240  D$ =RIGHT$ (C$, 1)
250  IF D$ ="S" THEN ELSE 400
260  PRINT#1  CHRS$ (02) ────────────────────▶ BEGINNING OF CODE (STX)
270  PRINT#1 "200R" ────────────────────────▶ I/O NO. RESET OUTPUT CODE (OFF)
280       SCREEN        200
                                        124
                                        123

390  GOTO 550
400       SCREEN        200
                                        124
                                        123

500  A$ =INKEY $
510  IF A$ ="S"
520  PRINT#1 CHR$ (02) ─────────────────────▶ BEGINNING OF CODE (STX)
530  PRINT#1 "200 S" ───────────────────────▶ I/O NO. SET OUTPUT CODE(ON)
540  GOTO 110
550  END
```

# FIG.9

EP 0 351 882 A2

## F I G.10

FIRST CODE

DC1 — — — — — — — — — — — — — — — MODE FLAG SET CODE

I/O NUMBER CODE     SECOND CODE

| STX | 1 | 2 | 3 | I (IN) | — — — INPUT CODE |

| STX | 2 | 0 | 0 | S (SET) | — — — SET OUTPUT CODE (ON) |

| STX | 2 | 0 | 0 | R (RESET) | — — — RESET OUTPUT CODE (OFF) |

| STX | T | 1 | 5 | S | START TIMER CODE |

TIMER

( R )   RESET TIMER CODE

( I )   TIMER INPUT CODE

## F I G.11

FIRST CODE

SECOND CODE

| STX | S (ON) |   SIGNAL ON |

| STX | R (OFF) |   SIGNAL OFF |

| STX | 1 | 2 | 3 | 4 | ETX | TIMER TIME |

BEL

TIMER DATA CODE

ERROR, ETC

# FIG.12

```
                    ( POWER ON )
                          |
                          v
              ┌─────────────────────┐
              │  INITIALIZE SYSTEM  │─── 11
              └─────────────────────┘
                          |
                          v
              ┌─────────────────────┐
              │   RESET MODE FLAG   │─── 12
              └─────────────────────┘
```

INTERRUPT                                          INTERRUPT

LOOP A                    13                    LOOP B

MODE FLAG SET ?          YES ───────────────►

NO                                              16

14          START SIGNAL ?                      TIMER SET ?          NO

NO                                              YES

15                       YES                    TIMER OPERATION ─── 17

15-a ──  PROCESS BY PC

15-b ──  STOP SIGNAL ?          NO

YES

# F I G.13

```
                    START          INTERRUPT
                      │
              ┌───────▼────────┐
              │ READ RECEIVED  │───18
              │     DATA       │
              └───────┬────────┘
         19           │
          ┌───────────▼───────────┐        YES
          │    MODE FLAG SET ?     ├──────────────┐
          └───────────┬───────────┘              │
                 NO   │                      25   │
         20           │              ┌────────────▼──────┐  YES      26
   NO ┌───────────────▼──┐           │    STX CODE ?     ├────────┐  │
   ┌──┤    DC 1 CODE ?    │           └────────┬──────────┘        │  │
   │  └───────────────┬──┘                NO   │          ┌────────▼──────┐
   │     22      YES  │                         │          │ RESET INTERNAL│
   │  ┌──────────────▼──┐              27       │          │   REGISTER    │
   │  │  SET MODE FLAG  │       ┌───────────────▼──┐  YES  └───────┬───────┘
   │  └──────────────┬──┘       │    IN CODE ?     ├────────┐   28 │
   │ 21              │          └───────────────┬──┘        │      │
   │                 │                     NO   │    ┌───────▼──────┐
┌──▼────────┐        │           34            │    │CHECK INTERNAL│
│ NORMAL PC │        │  YES ┌─────────────────┐ │    │   REGISTER   │
│ PROCESS   │        │  ┌───┤   SET CODE ?    │ │    └───────┬──────┘
└───────────┘        │  │   └─────────────────┘ │       29   │
                     │  │ 35          NO   │     │  ┌─────────▼──────┐ YES
                     │  │                  │     │  │ IS I/O NUMBER T?├────┐
                     │  │ ┌──────────────┐ │     │  └─────────┬──────┘    │
                     │  │ │SET DESIGNATED│ │     │       NO   │           │
                     │  │ │ NUMBER (ON)  │ │     │  ┌─────────▼──────┐30  │
                     │  │ └──────┬───────┘ │     │  │  READ ON/OFF   │    │
                     ▼  ▼        │         │     │  │  INFORMATION OF│    │
                              36 │         │     │  │DESIGNATED NUMBER│   │
                      YES ┌──────▼──────┐  │     │  └─────────┬──────┘    │
                      ┌───┤ RESET CODE? │  │     │       31   │           │
                      │   └──────┬──────┘  │     │  ┌─────────▼──────┐    │
        37 ┌──────────▼──┐   NO  │         │     │  │   SEND CODE    │    │
           │RESET DESIGNATED│    │         │     │  │   AND DATA     │    │
           │ NUMBER (OFF)   │ 38 │         │     │  └────────────────┘    │
           └───────────┬──┘  YES│         │     │                        │
                       │  ┌──────▼──────┐  │     │  ┌─────────▼──────┐32  │
                  39 ┌─▼──┤ I/O NUMBER? │  │     │  │  READ ELAPSE   │    │
                     │STORE IN INTERNAL│  │     │  │ INFORMATION OF │    │
                     │   REGISTER      │NO│     │  │DESIGNATED NUMBER│   │
                     └──────┬──────┘   ┌──▼────┐ │  └─────────┬──────┘    │
                            │          │SEND BEL│ │      33   │           │
                            │          │ CODE   │ │  ┌─────────▼──────┐   │
                            │          └───┬────┘ │  │   SEND CODE    │   │
                            │           40 │      │  │   AND DATA     │   │
                            │              │      │  └────────────────┘   │
                            └──────────────┴──────┴───────────────────────┘
                                         │
                                    ┌────▼────┐
                                    │   END   │
                                    └─────────┘
```

# F I G.14

FIRST CODE

| DC1 | ─ ─ ─ ─ ─ ─ ─ ─ ─ ─ ─ ─ ─ | MODE FLAG SET CODE |

| DC3 | ─ ── ─ ── ─ ── ─ ── ─ | MODE FLAG RESET CODE |

I/O NUMBER CODE                SECOND CODE

| STX | 1 | 2 | 3 | I (IN) | ───── INPUT CODE |

| STX | 2 | 0 | 0 | S (SET) | ───── SET OUTPUT CODE (ON) |

| STX | 2 | 0 | 0 | R (RESET) | ───── RESET OUTPUT CODE (OFF) |

| STX | T | 1 | 5 | S | START TIMER CODE |

TIMER

( R )  RESET TIMER CODE

( I )  TIMER INPUT CODE

# F I G.15

```
        ┌──────────────┐
        │   POWER ON    │
        └──────┬───────┘
               │
        ┌──────────────┐──11
        │INITIALIZE SYSTEM│
        └──────┬───────┘
               │
        ┌──────────────┐──12
        │RESET MODE FLAG │
        └──────┬───────┘
               │
```

13-a    MODE FLAG SET ?    YES
                │NO
14      START SIGNAL ?    NO
                │YES

16-a    TIMER SET ?    NO
                │YES
17-a    TIMER OPERATION

15
15-a    PROCESS BY PC

15-b    STOP SIGNAL ?    NO
                │YES

13-b    MODE FLAG SET ?    NO
                │YES
16-b    TIMER SET ?    NO
                │YES
17-b    TIMER OPERATION

EP 0 351 882 A2

# F I G.16

START ◄─ INTERRUPT

READ RECEIVED DATA — 18

MODE FLAG SET ? — 19

DC 3 CODE ? — 23 (YES)

DC 1 CODE ? — 20

SET MODE FLAG — 22

RESET FLAG MODE — 24

NORMAL PC PROCESS — 21

STX CODE ? — 25

RESET INTERNAL REGISTER — 26

IN CODE ? — 27

CHECK INTERNAL REGISTER — 28

SET CODE ? — 34

SET DESIGNATED NUMBER (ON) — 35

IS I/O NUMBER T ? — 29

READ ON/OFF INFORMATION OF DESIGNATED NUMBER — 30

RESET CODE ? — 36

RESET DESIGNATED NUMBER (OFF) — 37

SEND CODE AND DATA — 31

I/O NUMBER ? — 38

STORE IN INTERNAL REGISTER — 39

SEND BEL CODE — 40

READ ELAPSE INFORMATION OF DESIGNATED NUMBER — 32

SEND CODE AND DATA — 33

END

# F I G.17
PRIOR ART

EP 0 351 882 A2

# F I G.18
## PRIOR ART

# FIG.19
PRIOR ART

INTERRUPT

START

READ RECEIVED DATA

21

SEQUENCE PROGRAM TRANSFER CODE ? — NO

AND CODE ? — YES → STORE IN INTERNAL REGISTER

YES

WRITE FOR TRANSFER CODE ? — NO

OR CODE ? — YES → STORE IN INTERNAL REGISTER

YES

RECEIVE PROGRAM DATA

READ SEQUENCE PROGRAM MEMORY

NO

OUT CODE ? — YES → STORE IN INTERNAL REGISTER

WRITE INTO SEQUENCE PROGRAM MEMORY

SEND PROGRAM DATA

NO

I/O NUMBER CODE ? — YES

STORE IN INTERNAL REGISTER

NO

ALL RECEIVED ?

ALL SENT ? — NO

YES

YES

ENT CODE ? — YES

NO

SEND ERROR (BEL) CODE

WRITE CONTENT OF INTERNAL INTO SEQUENCE PROGRAM MEMORY. UPDATE MEMORY LOCATION

END

# F I G.20A

| MAIN PROGRAM | 11~15 |
| DECISION PROGRAM | 18~22 |
| INTERRUPT PROGRAM | 21 |
| I/O INFORMATION TRANSMISSION PROGRAM | 25~40 |

7

# F I G.20B

### PRIOR ART

| MAIN PROGRAM | |
| INTERRUPT PROGRAM | 21 |

7

EP 0 351 882 A2